# EUROPEAN PATENT APPLICATION

(11) **EP 1 372 095 A1**
(43) Date of publication of application: **17.12.2003**
(21) Application number: 03011266.8
(22) Date of filing: 16.05.2003
(51) Int. Cl.: G06F 17/60

(54) **Relay of application events as instant messages**

(30) Priority: 11.06.2002 US 167362
(71) Applicant: Siemens Information and Communication Networks Inc., Boca Raton, FL 33487-3587 (US)
(72) Inventor: Beyda, William J., Cupertino, CA 95014 (US)
(74) Representative: Berg, Peter, Dipl.-Ing.

(57) **Abstract**

Embodiments of the present invention provide a system, method, apparatus, means, and computer program code that facilitate or allow use of instant messages as notifications. In some embodiments, a notification is created by an application (152) to be sent or included in an instant message sent to a user. In other embodiments, middleware or other software (154) may intercept or detect a notification (e.g., dialogue boxes, pop-up windows) generated or initiated by an application (152) and create and send an instant message to a user based on the notification

## Description

### FIELD OF THE INVENTION

The present invention relates to a method and apparatus for using instant messaging to provide information regarding a notification initiated by an application.

### BACKGROUND OF THE INVENTION

Instant messaging is becoming a popular communications medium, both for personal and professional purposes. In a typical instant messaging system, a user may communicate with another user when both users are online and have a connection to an instant messaging server. A user can create a special list or people, known as a "buddy list" so that the user is informed when his or her "buddies" are online. Client software operating on the user's device (e.g., computer, personal digital assistant) creates a connection with the instant message server when the user logs on to the Internet or otherwise goes online. When the connection is established, the client software may send the list of designated buddies to the instant message server. The server then checks to see if any of the buddies are also online and periodically may recheck the list. When any of the user's buddies are online, the instant message server will inform the user's client software that the buddy is online and therefore is capable of sending and receiving instant messages. In addition, the buddy may be informed of the user's online presence. In this way, users can go online and know which of their designated buddies also are online at the same time and communicate with them using instant messages. Many applications have a need to notify a user of an event. For example, an application may use a pop-up window or dialogue box provided on a screen or display to alert a user to an upcoming appointment, inform a user of an arrival of a voice mail message, or remind a user to pay a bill. Unfortunately, if the user is not currently located at the device where the pop-up window or dialogue box is displayed, the user may not be notified.
It would be advantageous to provide methods and apparatus that overcame the drawbacks of the prior art. In particular, it would be desirable to provide a system, method, apparatus, means, and computer program code that allowed a user to be notified of events. In addition, it would be desirable to provide a system, method, apparatus, means, and computer program code that allowed a user to receive a notification generated by an application via an instant message.

### SUMMARY OF THE INVENTION

Embodiments of the present invention provide a system, method, apparatus, means, and computer program code that facilitate or allow use of instant messages to provide notifications. In some embodiments, a notification created by an application to be sent or included in an instant message sent to a user. For example, in some embodiments the application may register as an instant messaging entity and send instant messages directly to the user. In other embodiments, middleware or other software may intercept or detect a notification (e.g., dialogue boxes, pop-up windows) generated by an application and create and send an instant message to a user based on the notification.

Additional advantages and novel features of the invention shall be set forth in part in the description that follows, and in part will become apparent to those skilled in the art upon examination of the following or may be learned by the practice of the invention.

According to some embodiments of the present invention, a method for providing a notification may include determining a notification associated with an application; and providing an instant message indicative of the notification. In some other embodiments, a method for providing a notification may include registering with an instant message system; determining a notification associated with an application; determining an intended recipient of the notification; and providing an instant message to the intended recipient, wherein the instant message is indicative of the notification. The intended recipient may be a person, a device, an application, or some other entity.
According to some embodiments of the present invention, a system for providing a notification may include a memory; a communication port; and a processor connected to the memory and the communication port, the processor being operative to determine a notification associated with the application; and provide an instant message indicative of the notification.
In some further embodiments, a system for providing a notification may include a memory; a communication port; and a processor connected to the memory and the communication port, the processor being operative to register with an instant message system; determining a notification associated with an application; determine an intended recipient of the notification; and provide an instant message to the intended recipient, wherein the instant message is indicative of the notification.
According to some embodiments of the present invention, a computer program product in a computer readable medium for providing a notification may include first instructions for identifying a notification associated with an application; and second instructions for sending an instant message indicative of the notification. In some further embodiments, a computer program product in a computer readable medium for providing a notification may include first instructions for facilitating registration with an instant message system; second instructions for identifying a notification associated with an application; third instructions for identifying an intended recipient of the notification; and fourth instructions for send an instant message to the intended recipient, wherein the instant message is indicative of the notification.
According to some embodiments of the present invention, an apparatus for providing a notification may include means for associating with an instant message system; means for identifying a notification associated with an application; and means for sending an instant message indicative of the notification. In some further embodiments, an apparatus for providing a notification may include means for facilitating registration with an instant message system; means for identifying a notification associated with an application; means for identifying an intended recipient of the notification; and means for send an instant message to the intended recipient, wherein the instant message is indicative of the notification.

With these and other advantages and features of the invention that will become hereinafter apparent, the nature of the invention may be more clearly understood by reference to the following detailed description of the invention, the appended claims and to the several drawings attached herein.

### BRIEF DESCRIPTION OF THE DRAWINGS

The accompanying drawings, which are incorporated in and form a part of the specification, illustrate the preferred embodiments of the present invention, and together with the descriptions serve to explain the principles of the invention.
Figure 1 is a block diagram of system components for some embodiments of an apparatus in accordance with the present invention;
Figure 2 is another block diagram of system components for some embodiments of an apparatus in accordance with the present invention;
Figure 3 is a further block diagram of system components for some embodiments of an apparatus in accordance with the present invention;
Figure 4 is yet another block diagram of system components for some embodiments of an apparatus in accordance with the present invention;
Figure 5 is another block diagram of system components for some embodiments of an apparatus in accordance with the present invention;
Figure 6 is another block diagram of system components for some embodiments of an apparatus in accordance with the present invention;
Figure 7 is a flowchart illustrating a first embodiment of a method in accordance with the present invention;
Figure 8 is a flowchart illustrating a second embodiment of a method in accordance with the present invention; and
Figure 9 is a representative block diagram for components that may be used in the computer system of Figures 3-5.

### DETAILED DESCRIPTION

The applicant has recognized that there is a need for systems, means, computer program code and methods that facilitate or allow use of instant messages as notifications. In addition, applicant has recognized that there is a need to enable a notification created by an application to be sent or included in or as part of an instant message sent to a user. For example, in some embodiments the application may register as an instant messaging entity and send instant messages directly to the user. Allowing an application to register with an instant messaging system as an instant messaging entity enables the application to send notifications to a user even if the user is not located at the device on which the application is operating. Moreover, the user may still receive the instant message if the user changes devices, since the user's online presence may still be detected or monitored by an instant messaging system. In addition, the application does not need to know where the user is located in order to send the instant message.
In other embodiments, middleware or other software may intercept or detect a notification (e.g., dialogue boxes, pop-up windows) generated by an application and create and send an instant message to a user based on the notification. Thus, the user may be notified via instant message of the notification generated by the application and/or the contents of the notification, even if the user is not located at the device on which the application is operating. In addition, user of middleware of other software allows instant messages to be sent to the user without modification to the application or its operation. The middleware or other software may register as an instant message entity with an instant messaging system. In some embodiments, the application and the middleware may be operating on the same device. In other embodiments, the middleware and the application may be operating on different devices. The term "middleware" is used herein for purposes of convenience of explanation and no specific limitations are intended or implied by the use of the term "middleware".
These and other features will be discussed in further detail below, by describing a system, individual devices, and processes according to embodiments of the invention.

### System

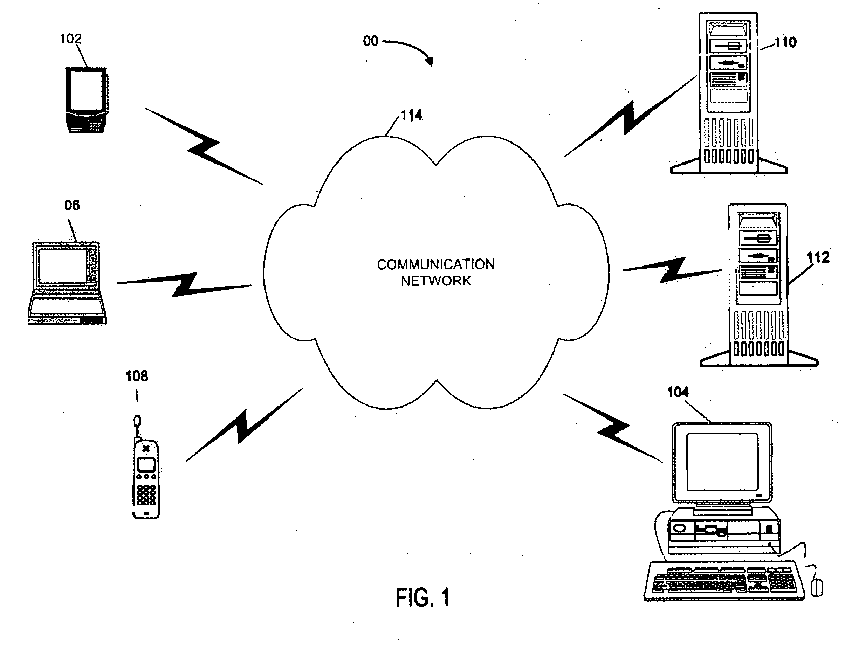

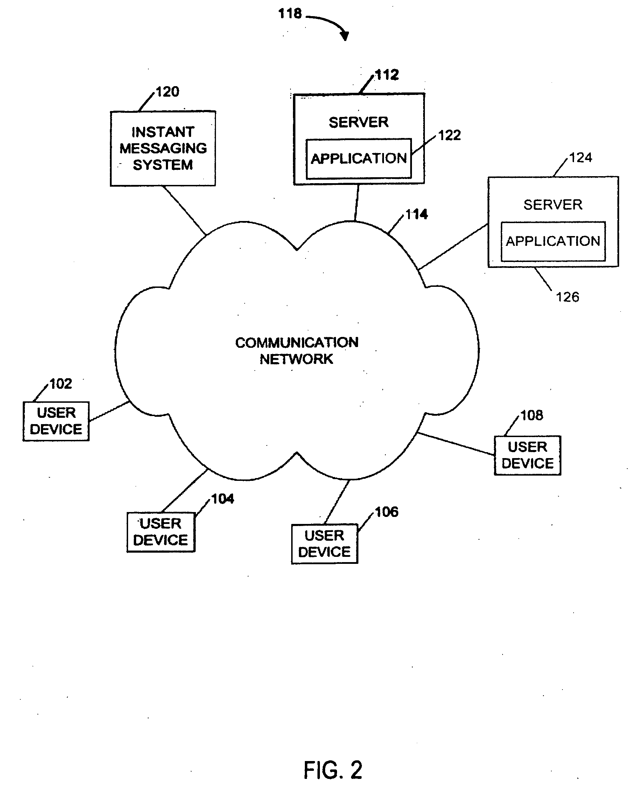

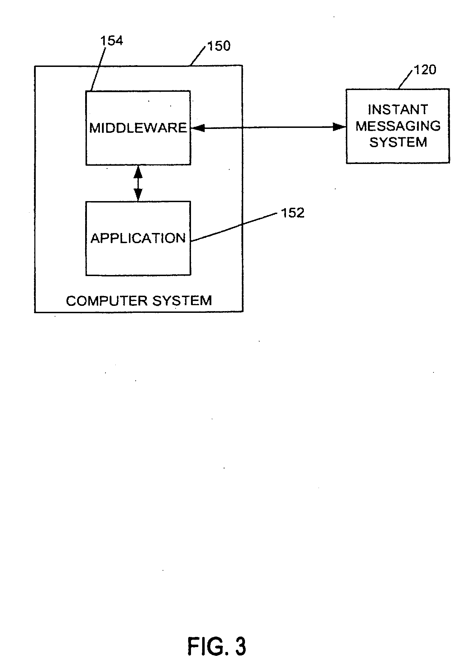

Now referring to Figure 1, an apparatus or system 100 usable with the methods disclosed herein is illustrated. The apparatus 100 may include one or more user or client devices 102, 104, 106, 108 that may communicate directly or indirectly with one or more servers, controllers or other devices 110, 112 via a computer, data, or other communications network 114.
The user or client devices 102, 104, 106, 108 preferably allow people or applications to interact with an instant message system and server (e.g., the server 110) and the remainder of the apparatus 100 and to send and receive instant messages. The user devices 102, 104, 106, 108 may have the appropriate or necessary hardware and/or software (e.g., client side instant message software) to send and/or receive instant messages via the instant message system 110, notify the instant message system 110 of their online presence, notify the instant message system 110 of their ability or availability to send and/or receive instant messages, etc. In some embodiments, a user device also may function as a server, and vice versa.
The user devices 102, 104, 106, 108 also may enable a user to access Web sites, software, databases, etc. hosted or operated by devices or other resources connected to or forming part of the communications network 114. Possible user or client devices include a personal computer, portable computer, mobile or fixed user station, workstation, network terminal or server, cellular telephone, kiosk, personal digital assistant, etc. In some embodiments, information regarding one or more users and/or one or more user devices may be stored in, or accessed from, a user information database and/or a user device information database.
For purposes of discussion, but not limitation, of the present invention, the server 110 will be assumed to be, be part of, or include an instant messaging server, service or system and thereby capable of detecting or monitoring the online presence of users, user devices, etc. as part of an instant message system. The server 110 may have the appropriate or necessary hardware and/or software to send and/or receive instant messages, monitor or detect the online presence of one or more users or other instant messaging entities (e.g., applications) pursuant to the present invention, etc. The server 110 also may provide other services or perform other functions (e.g., Web site hosting, application or transaction processing). In some embodiments, the server 110, the server 112 and/or, other servers discussed herein, can be or include a single device or computer, a networked set or group of devices or computers, a workstation, a desktop or laptop computer, a user device, etc. In some embodiments, the server 110 may provide other types of messaging or communication services (e.g., voice mail services, email services, Internet access). In some embodiments, software applications may be installed or operating on the server 110 and/or the server 112.
Although four user devices 102, 104, 106, 108 and two servers 110, 112 are shown in Figure 1, any number of such devices may be included in the system 100. The devices shown in Figure 1 need not be in constant communication. For example, a user device may communicate with a server only when such communication is appropriate or necessary. Many different types of implementations or hardware/software configurations can be used in the system 100 and its components and with the methods disclosed herein, and the methods disclosed herein are not limited to any specific hardware/software configuration for the system 100 or any of its components.
In some embodiments, the communications network 114 might be or include the Internet, the World Wide Web, or some other public or private computer, cable, telephone, client/server, peer-to-peer, or communications network or intranet, etc.
The communications network 114 illustrated in Figure 1 is meant only to be generally representative of cable, computer, telephone, peer-to-peer or other communication networks for purposes of elaboration and explanation of the present invention and other devices, networks, etc. may be connected to the communications network 114 without departing from the scope of the present invention. The communications network 114 also can include other public and/or private wide area networks, local area networks, wireless networks, data communication networks or connections, intranets, routers, satellite links, microwave links, cellular or telephone networks, radio links, fiber optic transmission lines, ISDN lines, T1 lines, DSL, etc. In some embodiments, a user device may be connected directly to a server without departing from the scope of the present invention. Moreover, as used herein, communications include those enabled by wired or wireless technology.
Now referring to Figure 2, an apparatus or system 118 usable with the methods disclosed herein is illustrated. The apparatus 118 may include the client devices 102, 104, 106, 108 and the server 112. In addition, the apparatus 118 may include an instant messaging system, service or device 120 (which may be or include the device 110).
The server 112 may include an application 122 that generates, or is capable of generating, a notification to a user of the application. The application may be or include an operating system, firmware, or other software operating on a device. For example, a financial software program operating on the server 112 may generate a notification and display or send the notification to a user that indicates to the user that a payment is due. As another example, a scheduling software program operating on the server 112 may generate a notification to alert a user of a scheduled appointment. While not illustrated in Figure 2, a user device (e.g., the user device 102, 104, 106 and/or 108) may include an application or have an application installed or operating on it that is capable of generating a notification to a user of the application or user device. The application may be or include an operating system, firmware, or other software operating on the user device. Thus, while the discussion that follows focuses primarily on an application or middleware operating on a server that may generate an instant message, the methods of the present invention also are usable with applications and/or middleware operating on a user device. For example, a financial management application operating on the user device 104 may periodically query a user's bank or financial accounts to determine the user's account balance. If the balance is too low or below a designated threshold, the application may provide an alert notification to the user that is displayed on or by the user device 108.
In some embodiments the application 122 may register with the instant message system 120 as an instant message entity so that the application 122 may send or otherwise provide a notification to a user via an instant message. Thus, the application's online presence may be detected or monitored by the instant message system 120. In addition, the user's presence may be detected or monitored by the instant message system 120 via the user's use of one or more of the user devices 102, 104, 106, 108. Presumably, the user also may be registered with the instant message system 118. In some embodiments, the apparatus 118 may include one or more additional servers 124 on which one or more additional instant messaging compliant applications 126 are operating or installed.
In some embodiments, an application operating on the sever 112 may generate a notification to a user via a pop-up window or dialogue box. The notification may be displayed on or by the server 112 or sent to a user device (e.g., the user device 106) for display on the user device. The application may be or include an operating system, firmware, of other software operating on a device. Middleware or other software operating on the same server 112 as the application may intercept or detect the notification and parse, collect or reformat information within the notification for use in or as part of an instant message. Alternatively, middleware or other software operating on the user device to which the notification was sent may intercept or detect the notification and parse, collect or reformat information within the notification for use in or as part of an instant message. For example, now referring to Figure 3, a computer system or other device 150 may have an application 152 installed or operating on it. The device 150 also may include other hardware (e.g., input device, communication port) and/or software components (e.g., operating system, other applications). In some embodiments, the device 150 may operate or function as a user or client device while in other embodiments the device 150 may operate or function as server or other device.
During operation of the application 152, the application 152 may generate an alert or other type of notification that is displayed on a screen or monitor associated with the computer system 152. For example, the application may alert or otherwise notify the user of a receipt of an email message. Middleware 154 operating on the computer system 150 may intercept or detect the alert, parse or translate the alert, and create an instant message that is sent to the user via the instant message system 120 if the user's online presence is recognized or detected by the instant message system 120 and/or if the user is otherwise able or available to receive an instant message. The instant message may include various information regarding the email notification or the application that initiated or generated the email notification. For example, the instant message may indicate who sent the email message, when the email message was received by the application 152, whether or not the email had any attachments, etc. depending on what information is determined by the middleware 154. While not indicated in Figure 3, the middleware 154 may communicate with the instant message system 120 via the communication network 114. In addition, the middleware 154 may register with the instant message system 120 as an instant message entity before or after the email message is received by the application 152 and/or before or after the application 152 creates the alert notification.
In some embodiments, the middleware 154 may be able to support, communicate with, or use instant messaging services and systems provided by multiple vendors. Thus, the middleware 154 may be able to determine which type or brand of instant message service or system a user is associated with and communicate with the user using instant messages accordingly.
While not illustrated in Figure 3, the computer system 150, the instant message system 120 and/or other devices (e.g., the user devices 102, 104, 106, 108; servers 112, 124) may be connected to or in communication with the communication network 114 and/or able to communicate with each other via the communication network 114.
While the application 152 and the middleware 154 are shown as operating on the same device 150, the middleware 154 also may monitor, detect or check for notifications initiated or sent by other applications operating on the device 150 and/or applications operating or installed on other devices. For example, an application (e.g., the application 122) that generates a notification intercepted or detected by the middleware 154 may reside or operate on a different device (e.g., the server 112) than the device 150. The application 122 may send a communication to the device 150 that prompts or includes a notification (e.g., a pop-up window, text box) to be displayed or created on the device 150. The middleware 154 may recognize, intercept or otherwise detect the notification and parse, collect or reformat information within the notification for use in or as part of an instant message sent by the middleware 154 via the instant messaging system 120.

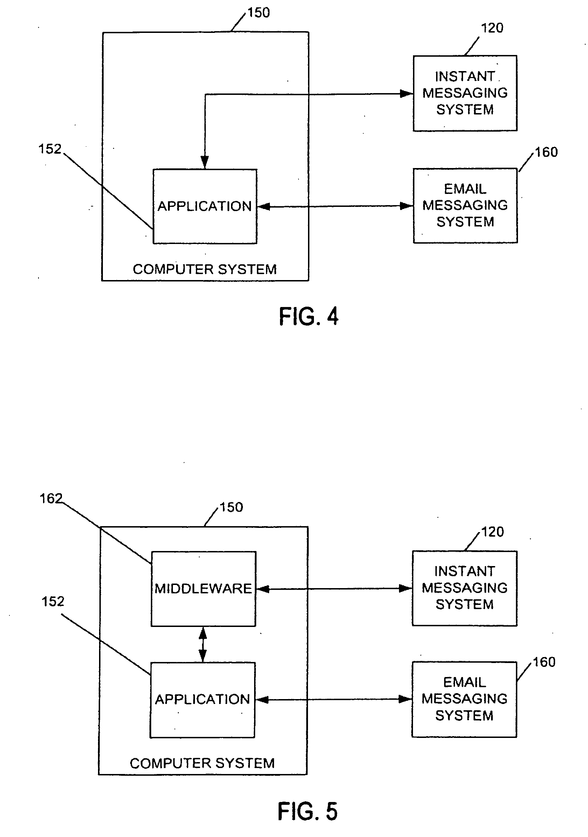

Now referring to Figure 4, another representative use of the system described above is illustrated. More specifically, in some embodiments, an application may be used to provide a notification to a user via an instant message of a receipt of a communication transmitted via a differently delivery or communication channel (e.g., email, telephone). For example, the computer system 150 may operate the application 152, which is capable of registering with the instant message system 120 and sending (and possibly receiving) instant messages. The application 152 may receive an email message sent via an email messaging system 160 and use instant messaging to alert or otherwise notify the designated recipient of the email message of the receipt of the email message. The application 152 may be capable of identifying the intended recipient of the email message and sending an instant message to the designated recipient regarding the email message. The instant message may include information contained in or about the email message (e.g., identity of sender, time email message was received, attachments). The application 152 may register with the instant messaging system 120 before or after the email message is received. In some embodiments, the application 152 may be used by a specific person to manage, send, read, receive and display email messages.

As an alternative, upon receipt or detection of an email message generated by the email system 160, the application 152 may generate a notification that is intercepted or otherwise detected by middleware 162 operating on the computer system 150, as illustrated in Figure 5. The middleware 162 may then create and send an instant message to the intended recipient of the email message regarding the email message. The middleware 162 may be capable of identifying the intended recipient of the email message and sending an instant message to the designated recipient regarding the email message and the instant message may include information contained in or about the email message (e.g., identity of sender, time email message was received, attachments).
As previously discussed above, the middleware 162 may register as an instant message entity with the instant message system 120, be capable of sending and/or receiving instant messages, etc.

While the examples illustrated in Figures 4 and 5 allow a user to be notified via instant message of receipt of an email communication, the same concept also can be used to notify a user via instant message of receipt of other forms or types of communication (e.g., facsimile transmission, voice mail message, receipt of an XML or FTP transmission, receipt of a wire or other financial account transfer, etc).

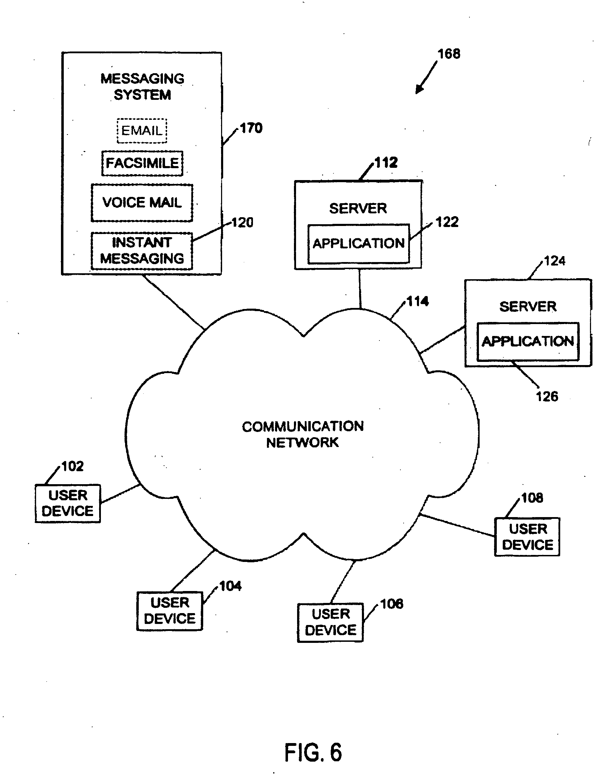

In some embodiments, the instant message system 120 may be part of a more complete messaging or communication processing system, such as illustrated in a system 168 of Figure 6 where a messaging or communication system 170 includes the instant message system 120 as a component in a more robust communication system that allows notifications created by one or more applications (e.g., the application 122) to result in communications to users or user devices. Thus, instant messages as well as other forms of communication may be used to contact users. If a user's presence online and/or ability to receive an instant message is detected or otherwise determined by the system 170 (e.g., by operation of the instant message system 120), the system 170 may use instant messaging or the instant message system 120 to contact the user. If the user's online presence is not detected by the system 170, or if the user is for some reason unable to receive an instant message, then the system 170 may use another method of sending a notification to the user (e.g., leave a voice mail message, transmit an email message).

### Process Description

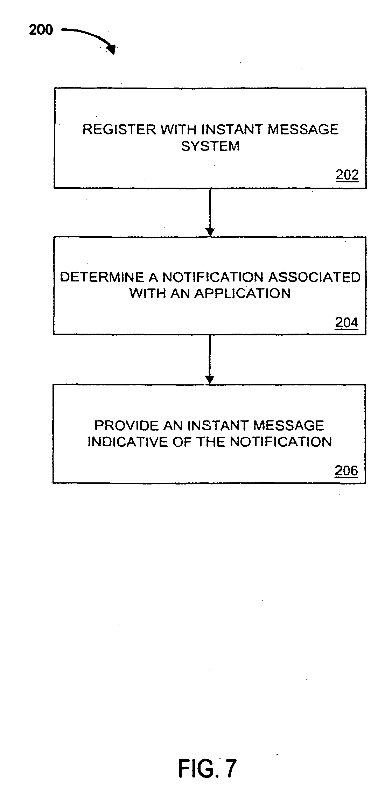

Reference is now made to Figure 7, where a flow chart 200 is shown which represents the operation of a first embodiment of the present invention. The particular arrangement of elements in the flow chart 200 is not meant to imply a fixed order to the steps; embodiments of the present invention can be practiced in any order that is practicable. In some embodiments, the method 200 may be implemented by an application (e.g., the application 122), middleware on behalf of one or more applications (e.g., middleware 154), or some other hardware and/or software combination or configuration.

Processing begins at a step 202 during which an entity registers with an instant message system (e.g., the instant message system 120). In some embodiments, the entity may be an application (e.g., application 126), middleware (e.g., middleware 154), a device (e.g., server 124, computer system 150), etc. In some embodiments, the entity may register with the instant messaging system when the entity goes online, becomes able or available to send and/or receive instant messages, develops or establishes an online presence, etc. Thus, registration of the entity with the instant message system may be conducted proactively or initiated by the entity with the instant message system. In some embodiments, the instant message system may detect the online presence or availability the entity, the ability or availability of the entity to send and/or receive an instant message, etc. Thus, registration of the entity with the instant message system may be conducted proactively or initiated by the instant message system. In some embodiments, registration or an entity during the step 202 may occur only when necessary or desired. In other embodiments, an entity may maintain a constant or continuous registration with an instant message system.

As one example of the step 202, the application 122 may register with the instant message system 120 when the application 122 becomes able or available to communicate via instant messages via users who also may be registered with the instant message system 120. As another example, the application 122 may register with the instant message system 120 when the application 122 needs to send an instant message to a user or other application.
One or more of the users may have an online presence via one or more of the user devices 102, 104, 106, 108. The user devices 102, 104, 106, 108 may have the appropriate or necessary hardware and/or software (e.g., client side instant message software) to send and/or receive instant messages via the instant message system 120, to notify the instant message system 120 of their online presence, to notify the instant message system 120 of their ability or availability to send and/or receive instant messages, etc. Similarly, the application 122 may have the appropriate or necessary hardware and/or software to send and/or receive instant messages via the instant message system 120, to notify the instant message system 120 of its online presence, to notify the instant message system 120 of its need, ability or availability to send and/or receive instant messages, etc.

As another example, the middleware 154 may register with the instant message system 120 during or as part of the step 202 when the middleware 154 becomes able or available to communicate via instant messages to one or more users who also may be registered with the instant message system 120. The middleware 154 may have the appropriate or necessary hardware and/or software to send and/or receive instant messages via the instant message system 120, to notify the instant message system 120 of its online presence, to notify the instant message system 120 of its need, ability or availability to send and/or receive instant messages, etc.

The entity that registers with the instant message system during the step 202 may operate on behalf of a single application, multiple applications, and/or multiple users. For example, the middleware 154 may register with the instant message system 120 and represent or operate on behalf of only the application 152. The application 152 may be operating for use or benefit of a single user or multiple users. In contrast, the middleware 154 may represent or operate on behalf of other applications (not shown) in addition to the application 152. Each of the other applications may be operating for use or benefit of one or more users.

In some embodiments, the step 202 may not be used or may be conducted as part of a later step in the method 200.

During a step 204, a notification associated with an application is determined. For example, an application operating on a device may generate or create a notification (e.g., pop-up text box, pop-up window, icon, text message, sound signal) that is displayed by the device. The notification may be intercepted or detected during the step 204. As a more specific example, a personal scheduling application may generate and display a text box reminder that a user has a scheduled conference call in ten minutes. The text box, or a call to create or display the text box, may be intercepted or detected as part of the step 204. As another example, an email management application may generate and display a pop-up window that indicates that a new email message has been received. The pop-up window or a function call to create or display the pop-up window may be intercepted or detected. As another example, an application may include or be firmware, micro code, or an operating system that generates a pop-up window or text message indicating a problem or error (e.g., improper printer configuration, detection of a hardware interrupt signal, failure of a hard disk drive, memory allocation problem) regarding a device on which the firmware or operating system is operating or supporting. In other embodiments, an application or middleware may intercept or detect a function call created by another application and generate an instant message function call to initiate creating or sending of an instant message. In some embodiments, the application that creates the notification determined during the step 204 may be the same application that was registered with the instant message system during the step 202. In such cases, the notification might be or include the application setting a flag, bit or interrupt that causes the application to create an instant message indicative of the notification. In other embodiments, the application that creates the notification determined during the step 204 may be separate from the application, middleware, etc. that registered with the instant message system during the step 202. For example, the application 152 may generate a notification that is detected by the middleware 154 during the step 204. The middleware 154 previously may have registered with the instant message system 120 during the step 202.

In some embodiments, the step 204 may occur before the step 202. For example, the application 152 may generate a notification that is detected by the middleware 154 during the step 204. The middleware 154 may then register with the instant message system 120 during the step 202. Thus, in these embodiments, the middleware 154 does not need to register as an instant message entity or with an instant message system unnecessarily or incur the time, expense, overhead, etc. of creating or maintaining an instant message registration.
In some embodiments, the notification determined during the step 204 may include one or more of the following: data indicative of the application that initiated or generated the notification; data indicative of a time the notification was initiated, generated or sent; data indicative of at least one allowable response to the notification;

data indicative of an intended recipient of the notification; data indicative of a time by or time period in which a response to the notification is due; etc. The intended recipient may be a person, a device, an application, or some other entity. In some embodiments, the step 204 of determining a notification may include one or more of the following: determining an intended recipient of the notification; identifying an application or other source or generator of the notification; parsing, reformatting or translating information contained in the notification (e.g., shortening the information contained in the notification); extracting information from the notification (e.g., identify of intended recipient, a description of the subject of the notification, the date/time notification was generated or sent) ; determining a user associated with an application or other source or generator of the notification; determining an allowable response associated with the notification; intercepting or detecting the notification; canceling the notification; determining a party associated with the notification other than the intended recipient of the notification; etc.

In some embodiments of the method 200, the entity that registers during the step 202 may need to recognize the installation or operation of the application that generates the notification determined during the step 204. For example, the middleware 154 may detect or recognize installation and/or operation of the application 152 on the device 150. In addition, in some embodiments, the entity that registers during the step 202 may need to determine if the application that generates the notification determined during the step 204 approves of using instant messages to communicate with users regarding notifications generated or sent by the application. For example, the middleware 154 may query the application 152 to determine if the application 152 wishes to, or approves of, use of instant messages to communicate with users regarding notifications sent or generated by the application 152. Alternatively, the application 152 may establish settings that indicate approval to use such instant messages. The middleware 154 or the application 152 also may query the users to determine of the users wish to receive instant messages indicative of the notifications.

During a step 206, an instant message is provided that is indicative of the notification determined during the step 204. The notification may be provided by the entity that registered with the instant message system during the step 202. In some embodiments, more than one instant message may be sent to one or more parties during the step 206 regarding a single notification detected during the step 204. In some embodiments, more than one instant message might be sent or otherwise provided to an intended recipient of a notification regarding the single notification. In some embodiments, the intended recipient may be a person, a device, an application, or some other entity.

In some embodiments, the instant message sent or initiated during the step 206 may include one or more of the following: data indicative of the application that initiated or generated the notification; data indicative of a time the notification was initiated, generated or sent; data indicative of at least one allowable response to the notification;
data indicative of an intended recipient of the notification; data indicative of a time by or time period in which a response to the notification is due; etc.
In some embodiments, the instant message may be provided to the intended recipient of the notification determined during the step 204. For example, a security application (e.g., the application 152) may create an automated voice mail message or alert to a user at a telephone number provided by the user to the application. The voice mail message serves as the notification. The middleware 154 may detect the notification and create an instant message sent to the user that is indicative of the voice mail message. The voice mail alert may be provided to the user device 108. However, the user may be currently using the user device 106 as indicated by the online presence of the user via the user device 106 known to the instant message system 120. Thus, the instant message sent by the middleware 154 can reach the user at the user device 106. If the user later changes from using the user device 106 to the user device 102, later instant messages can still be sent from the middleware 154 to the user. Neither the application 152 nor the middleware 154 has to know what device the user is using to have an online presence as the instant message system 120 will take care of routing the instant message sent from the middleware 102 to the appropriate device.

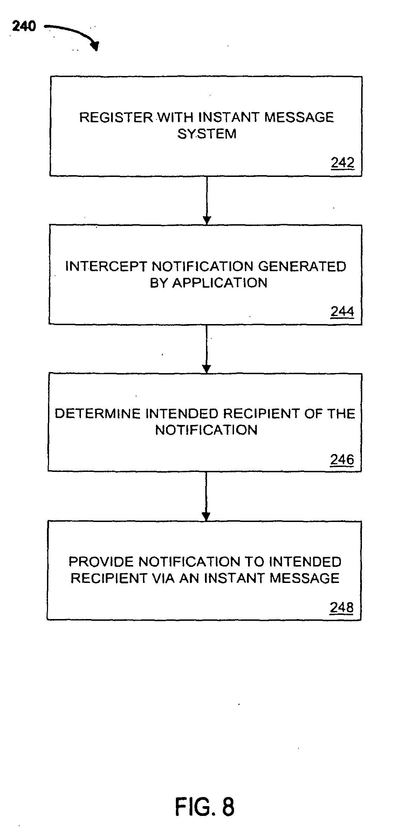

In other embodiments, the instant message provided during the step 206 may be provided to a party other than the intended recipient of the notification determined during the step 204. For example, if the intended recipient of the notification does not have an online presence, or otherwise cannot be reached via an instant message, an instant message regarding the notification may be sent to another party.
The other party may be a party identified in the notification, a party associated with the user, a party associated with the application or other source of the notification, etc. As a more specific example, suppose a security application generates an automated voice notification directed to the telephone number of a designated recipient. The notification may be detected by the middleware 154, which may then determine that the intended recipient does not have an online presence or otherwise is not able or available to receive an instant message from the middleware 154. Thus, the middleware 154 may look for and find another party (e.g., the intended recipient's supervisor or coworker) who does have an online presence or who is otherwise able or available to receive an instant message from the middleware 154 regarding the notification and send such an instant message to such party.
As previously discussed above, in some embodiments, the step 202 may not be used or may be conducted as part of a later step in the method 200. For example, the step 202 may be encompassed in, be part of, or combined with the step 206. Thus, the step 206 may include an entity registering or associating with an instant message system as part of sending or otherwise providing an instant message communication.
In some embodiments, the method 200 may include one or more of the following: determining an intended recipient of the notification; identifying an application or other source or generator of the notification; parsing, reformatting or translating information contained in the notification (e.g., shortening the information contained in the notification); extracting information from the notification (e.g., identify of intended recipient, notification subject description, date/time notification was generated or sent); determining an allowable response to a notification; providing an indicative or an allowable response to a notification in an instant message; receiving a communication indicative of an allowable response to a notification; providing data indicative of an allowable response to an application; determining a user associated with an application or other source or generator of the notification; intercepting the notification; canceling the notification; determining if an intended recipient of the notification is online or otherwise capable or currently able of receiving an instant message; determining a party other than an intended recipient of the notification to send an instant message to regarding the notification; determining availability or ability of a party other than an intended recipient of the notification to receive an instant message to regarding the notification; etc.
Reference is now made to Figure 8, where a flow chart 240 is shown which represents the operation of a second embodiment of the present invention. The particular arrangement of elements in the flow chart 240 is not meant to imply a fixed order to the steps; embodiments of the present invention can be practiced in any order that is practicable. In some embodiments, the method 240 may include one or more of the variations previously discussed above in regard to the method 200. In some embodiments, the method 200 is particularly well suited for implementation by an application (which might be or include middleware) on behalf of one or more other applications.

Processing begins at a step 242 during which an entity registers with an instant message system (e.g., the instant message system 120). In some embodiments, the entity may be an application (e.g., application 126) or middleware (e.g., middleware 154) that is operating on behalf of one or more other applications. In some embodiments, the entity may register with the instant messaging system when the entity goes online, becomes able or available to send and/or receive instant messages, develops or establishes an online presence, etc. In some embodiments, the instant message system may detect the online presence or availability the entity, the ability or availability of the entity to send and/or receive an instant message, etc. In some embodiments, registration during the step 202 may occur only when necessary or desired. In other embodiments, an entity may maintain a constant or continuous registration with an instant message system. The step 242 is similar to the step 202 previously discussed above. In some embodiments, the step 242 may be optional or be combined with or part of another step in the method 240. In some embodiments of the method 240, the entity that registers during the step 242 may need to recognize the installation or operation of the application that generates the notification determined during the step 244, as previously discussed above. In addition, in some embodiments of the method 240, the entity that registers during the step 242 may need to determine if the application that generates the notification determined during the step 244 approves of using instant messages to communicate with users regarding notifications generated or sent by the application., also as previously discussed above.

During a step 244, a notification generated by an application is intercepted or otherwise determined. The step 244 is similar to the step 204 previously discussed above.

For example, the middleware 154 may detect a notification generated by the application 152.

During a step 246, an intended recipient is determined regarding the notification determined during the step 244.
In some embodiments, the intended recipient may already be known to the hardware or software implementing the method 240. Thus, the step 246 may be optional or completed prior to the step 242 and/or the step 244. For example, the entity (e.g., middleware 154) completing the step 242 may be working with or on behalf of only one application that is operating on behalf of a single user. Thus, the intended recipient is known even before a notification is determined during the step 244. The entity may communicate with the application to determine or identify the user in advance of any notification or access a resource (e.g., database, file) that maintains a list of users associated with applications.

In some embodiments, the entity registering during the step 242 may be acting on behalf of multiple applications and/or one or more users associated with one or more of the applications. For example, the middleware 154 may be operating on behalf of the application 152 and two other applications (which may or may not be located or operating on the computer system 150). Each of the three applications may be operating on behalf of one or more users. Thus, when the notification is determined during the step 244, the intended recipient of the notification is determined during the step 246.

Identifying an intended recipient of a notification may happen in a variety of ways. For example, if the application from which the notification is sent is associated only with a single user, all notifications sent from the application will be intended for the single user. In another example, the notification may include information identifying the intended recipient (e.g., name, email address, user identifier) that can be used to determine the intended recipient. As another example, the entity conducting the step 246 may query the application that generated the notification if the entity cannot determine the intended recipient from the notification.

During a step 248, an instant message is sent to the intended recipient determined during the step 246 regarding the notification determined during the step 244. The step 248 is similar to the step 206 previously discussed above.
In some embodiments, more than one instant message might be sent to the intended recipient regarding a single notification. In addition, in some embodiments, the same or different instant messages regarding the notification determined during the step 244 might be sent to other parties as well.
In some embodiments of the method 240, the step 242 may not be used or may be conducted as part of a later step in the method 240. For example, the step 242 may be encompassed in, be part of, or combined with the step 248. Thus, the step 248 may include an entity registering or associating with an instant message system as part of sending or otherwise providing an instant message communication.

In some embodiments, either the method 200 and/or the method 240 may include determining if a user wishes to receive an instant message communication indicative of a notification. For example, the middleware 154 may query the user to determine if the user wants to receive instant messages regarding notifications generated by one or more applications. Alternatively, the middleware 154 may query a user information database or other resource that may contain settings information regarding whether the user wishes to receive such instant messages.
As another example, during installation or boot-up of an application that might generate a notification, the application may register as an entity with an instant messaging system. The application may check a user's instant message system and ask the user if the user wishes to receive instant messages regarding notifications generated by the application. If the user does so wish, the application might determine the user's instant message system and configure or register itself to communicate with the same instant message system. The application might be entered on the buddy list of the user, and vice versa.
In some embodiments of the methods disclosed herein, an instant message sent to a user regarding a notification might allow the user to respond to the notification. For example, with reference again to Figure 3, the application 152 might initiate or generate a notification that is detected by the middleware 154 that initiates an instant message sent via the instant message system 120. The notification may have requested a viewer of the message to indicate a decision or selection (e.g., "1" for "yes", "2" for "no"). The instant message may include an indicator of the two choices and prompt the user to respond in a certain way to indicate the user's selection (e.g., send an instant message back with only the number "1" in it if the choice is one or only the number "2" in it if the choice is two). The middleware 154 may then parse the response instant message and provide an input, answer, or response to the notification initiated or generated by the application 152. As a more specific example, if the application 152 is a financial management application, the application might monitor a user's bank account balance and send an alert notification to the user if the balance gets to low, is below a threshold designated by the user, is not sufficient to pay the user's upcoming bills, etc. The alert notification may appear as a pop-up window on the device 150 that asks the user if the user wishes to transfer funds from a different account into the monitored account and ask the user to type or select "yes" or "no".
The middleware 154 may detect the notification and the two choices and indicate such in an instant message sent via the instant message system 120. In addition, the instant message may indicate that the user can, if so desired, respond to the choices provided in the notification by sending an instant message to the middleware 150 that includes only a "1" if the user's choice is "yes" or only a "2" if the user's choice is "no". If the middleware 154 receives such an instant message from the user that includes one of the designated indications, the middleware 154 may provide or initiate an appropriate or corresponding response to the application 152.

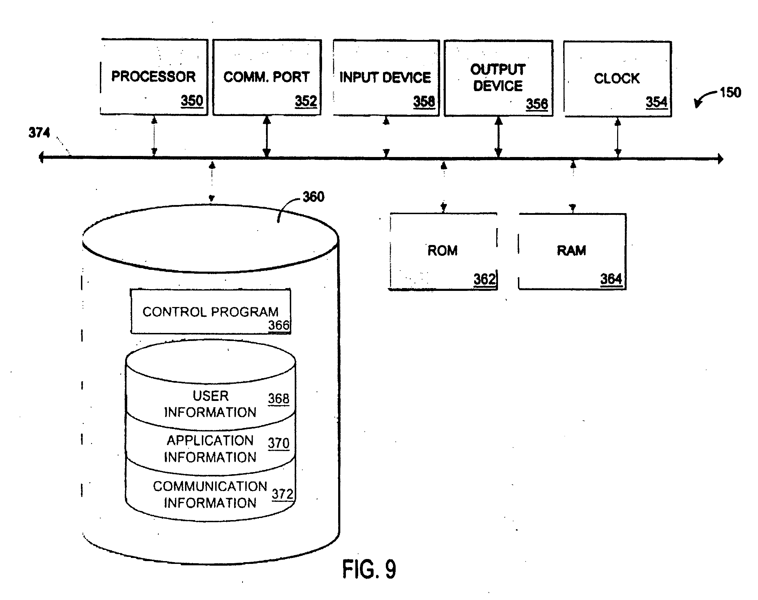

As illustrated by the examples in the paragraph above, in some embodiments one or more of the methods disclosed herein may include determining data indicative of an allowable response to an notification; providing data in an instant message indicative of an allowable response to a notification; receiving an instant message indicative of an allowable response to a notification; and/or providing data indicative of an allowable response to an application.
Now referring to Figure 9, a representative block diagram of the device 150 is illustrated. As previously mentioned above, in some embodiments the device 150 may be or include a computer or computer system. The device 150 may include a processor, microchip, central processing unit, or computer 350 that is in communication with or otherwise uses or includes one or more communication ports 352 for communicating with account holder devices and/or other devices. Communication ports may include such things as local area network adapters, wireless communication devices, Bluetooth technology, etc. The device 150 also may include an internal clock element 354 to maintain an accurate time and date for the device 150, create time stamps for communications (e.g., notifications, instant messages) received or sent by the device 150, etc.
If desired, the device 150 may include one or more output devices 356 such as a printer, infrared or other transmitter, antenna, audio speaker, display screen or monitor, text to speech converter, etc., as well as one or more input devices 358 such as a bar code reader or other optical scanner, infrared or other receiver, antenna, magnetic stripe reader, image scanner, roller ball, touch pad, joystick, touch screen, microphone, computer keyboard, computer mouse, etc. In addition to the above, the device 150 may include a memory or data storage device 360 to store information, software, databases, communications, device drivers, the application 152 (not shown in Figure 9) and/or the middleware 154 (not shown in Figure 9) etc. The memory or data storage device 360 preferably comprises an appropriate combination of magnetic, optical and/or semiconductor memory, and may include, for example, Random Read-Only Memory (ROM), Random Access Memory (RAM), a tape drive, flash memory, a floppy disk drive, a Zip^{TM} disk drive, a compact disc and/or a hard disk. The device 150 also may include separate ROM 362 and RAM 364.
The processor 350 and the data storage device 360 in the device 150 each may be, for example: (i) located entirely within a single computer or other computing device; or (ii) connected to each other by a remote communication medium, such as a serial port cable, telephone line or radio frequency transceiver. In some embodiments, the device 150 may comprise one or more computers that are connected to a remote server computer for maintaining databases.
A conventional personal computer or workstation with sufficient memory and processing capability may be used as the device 150. In some embodiments, the device 150 operates as or includes a Web server for an Internet environment. The device 150 preferably is capable of high volume transaction processing, performing a significant number of mathematical calculations in processing communications and database searches. A Pentium^{TM} microprocessor such as the Pentium III^{TM} or IV^{TM} microprocessor, manufactured by Intel Corporation may be used for the processor 350. Equivalent processors are available from Motorola, Inc., AMD, or Sun Microsystems, Inc. The processor 350 also may comprise one or more microprocessors, computers, computer systems, etc.
Software may be resident and operating or operational on the device 150. The software may be stored on the data storage device 360 and may include a control program 366 for operating the server, databases, etc. The control program 366 may control the processor 350. The processor 350 preferably performs instructions of the control program 366, and thereby operates in accordance with the present invention, and particularly in accordance with the methods described in detail herein. The control program 366 may be stored in a compressed, uncompiled and/or encrypted format. The control program 366 furthermore includes program elements that may be necessary, such as an operating system, a database management system and device drivers for allowing the processor 350 to interface with peripheral devices, databases, etc. Appropriate program elements are known to those skilled in the art, and need not be described in detail herein.
The device 150 also may include or store information regarding applications, users, user devices, notifications, instant message systems, instant messages, transactions calculations, algorithms, communications, etc. For example, information regarding one or more users (e.g., name, address, buddy list name, instant message service used, approval to use instant messages regarding notifications) may be stored in a user information database 368 for use by the device 150 or another device or entity. Information regarding one or more applications may be stored in an application information database 370 for use by the device 150 or another device or entity and information regarding one or more communications (e.g., notifications received, instant messages sent and/or received) may be stored in a communication database 372 for use by the device 150 or another device or entity. In some embodiments, some or all of one or more of the databases may be stored or mirrored remotely from the device 150.
According to an embodiment of the present invention, the instructions of the control program may be read into a main memory from another computer-readable medium, such as from the ROM 362 to the RAM 364. Execution of sequences of the instructions in the control program causes the processor 350 to perform the process steps described herein. In alternative embodiments, hard-wired circuitry may be used in place of, or in combination with, software instructions for implementation of some or all of the methods of the present invention. Thus, embodiments of the present invention are not limited to any specific combination of hardware and software.
The processor 350, communication port 352, clock 354, output device 356, input device 358, data storage device 360, ROM 362, and RAM 364 may communicate or be connected directly or indirectly in a variety of ways. For example, the processor 350, communication port 352, clock 354, output device 356, input device 358, data storage device 360, ROM 362, and RAM 364 may be connected via a bus 374.
While specific implementations and hardware configurations for the device 150 has been illustrated, it should be noted that other implementations and hardware configurations are possible and that no specific implementation or hardware configuration is needed. Thus, not all of the components illustrated in Figure 9 may be needed for the device 150. In addition, in some embodiments, one or more of the user devices 102, 104, 106, 108 and/or the servers 110, 112 or instant message system 120 may include or have components similar to the components illustrated in Figure 9.
The methods of the present invention may be embodied as a computer program developed using an object oriented language that allows the modeling of complex systems with modular objects to create abstractions that are representative of real world, physical objects and their interrelationships. However, it would be understood by one of ordinary skill in the art that the invention as described herein could be implemented in many different ways using a wide range of programming techniques as well as general-purpose hardware systems or dedicated controllers. In addition, many, if not all, of the steps for the methods described above are optional or can be combined or performed in one or more alternative orders or sequences without departing from the scope of the present invention and the claims should not be construed as being limited to any particular order or sequence, unless specifically indicated.
Each of the methods described above can be performed on a single computer, computer system, microprocessor, etc. In addition, two or more of the steps in each of the methods described above could be performed on two or more different computers, computer systems, microprocessors, etc., some or all of which may be locally or remotely configured. The methods can be implemented in any sort or implementation of computer software, program, sets of instructions, code, ASIC, or specially designed chips, logic gates, or other hardware structured to directly effect or implement such software, programs, sets of instructions or code. The computer software, program, sets of instructions or code can be storable, writeable, or savable on any computer usable or readable media or other program storage device or media such as a floppy or other magnetic or optical disk, magnetic or optical tape, CD-ROM, DVD, punch cards, paper tape, hard disk drive, Zip^{TM} disk, flash or optical memory card, microprocessor, solid state memory device, RAM, EPROM, or ROM.
Although the present invention has been described with respect to various embodiments thereof, those skilled in the art will note that various substitutions may be made to those embodiments described herein without departing from the spirit and scope of the present invention.
The words "comprise," "comprises," "comprising," "include," "including," and "includes" when used in this specification and in the following claims are intended to specify the presence of stated features, elements, integers, components, or steps, but they do not preclude the presence or addition of one or more other features, elements, integers, components, steps, or groups thereof.

The embodiments of the invention in which an exclusive property or privilege is claimed are defined as follows:

## Claims

1. A method for providing a notification, comprising:
determining a notification associated with an application (152); and
providing an instant message indicative of said notification.

2. The method of claim 1, wherein said registering with an instant message system (12) includes said application (152) registering with said instant message system (120).

3. The method of claim 1, wherein said determining a notification associated with an application (152) includes a least one of the following:
detecting a notification generated by said application (152); and
intercepting a notification generated by said application (152).

4. The method of claim 1, wherein said providing an instan message indicative of said notification includes determining an intended recipient of said notification and sending said instant message to said recipient.

5. The method of claim 1, further comprising:
determining a party associated with said application (152).

6. The method of claim 5, further comprising:
determining if said party consents to receiving said notification via an instant message.

7. The method of claim 5, further comprising:
determining if said party is able to receive an instant message.

8. The method of claim 1, further comprising:
determining an intended recipient of said notification.

9. The method of claim 8, further comprising:
determining if said intended recipient approves of receiving an instant message regarding said notification.

10. The method of claim 1, further comprising:
determining if said application (152) allows said sending of said instant message regarding said notification.

11. The method of claim 1, further comprising:
determining data indicative of an allowable response to said notification.

12. The method of claim 11, further comprising:
providing data in said instant message indicative of said allowable response.

13. The method of claim 12, further comprising:
receiving an instant message indicative of said allowable response.

14. The method of claim 13, further comprising:
providing data indicative of said allowable response to said application (152).

15. A system (150) for providing a notification comprising:
a memory (360);
a communication port (352); and
a processor (350) connected to said memory (360) and said communication port (352), said processor (350) being operative to:
determine a notification associated with an application (152); and
provide an instant message indicative of said notification.

16. A computer program product in a computer readable medium for providing a notification, comprising:
first instructions for identifying a notification associated with an application (150); and
second instructions for sending an instant message indicative of said notification.
